(19) Europäisches Patentamt
European Patent Office
Office européen des brevets

(11) EP 4 311 815 A1

(12) **EUROPEAN PATENT APPLICATION**

(43) Date of publication:
**31.01.2024 Bulletin 2024/05**

(21) Application number: **22306154.0**

(22) Date of filing: **29.07.2022**

(51) International Patent Classification (IPC):
***C04B 24/26*** (2006.01) ***C04B 28/02*** (2006.01)
***C04B 28/04*** (2006.01)

(52) Cooperative Patent Classification (CPC):
(C-Sets available)
**C04B 24/2694; C04B 24/2647; C04B 24/267; C04B 28/021; C04B 28/04** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Ecocem Materials Limited**
  **Dublin 3 D03E0C0 (IE)**
- **Ecole Normale Supérieure Paris-Saclay**
  **91190 Gif-sur-Yvette (FR)**
- **Centre National de la Recherche Scientifique (CNRS)**
  **75016 Paris (FR)**
- **Université Paul Sabatier Toulouse III**
  **31400 Toulouse (FR)**
- **Institut National des Sciences Appliquées de Toulouse**
  **31077 Toulouse Cedex 4 (FR)**

(72) Inventors:
- **FROUIN, Laurent**
  **75012 PARIS (FR)**
- **ALFANI, Roberta**
  **75012 PARIS (FR)**
- **LANIESSE, Priscillia**
  **75012 PARIS (FR)**
- **WATTEZ, Thomas**
  **75012 PARIS (FR)**
- **CHAOUCHE, Mohend**
  **91190 GIF SUR YVETTE (FR)**
- **CYR, Martin**
  **31077 TOULOUSE CEDEX 4 (FR)**

(74) Representative: **Plasseraud IP**
**66, rue de la Chaussée d'Antin**
**75440 Paris Cedex 09 (FR)**

# (54) BINDER COMPOSITIONS FOR THE BUILDING INDUSTRY INCLUDING POZZOLANIC MATERIAL AND HIGH VOLUME FILLER

(57) The invention concerns a binder composition comprising:
a. between 10% and 49% in dry weight of Portland cement, lime or a mixture thereof;
b. between 10% and 49% in dry weight of at least one pozzolanic material;
c. between 21% and 80% in dry weight of at least one filler;
d. between 0.1% and 10% in dry weight, relative to the total weight of components a, b and c, of at least one activator;
e. between 0.05% and 1.5% in dry weight, relative to the total weight of components a, b and c, of at least one rheology enhancing admixture ;
said filler being a particles mixture of:
- between 10% and 100% in weight, in respect with the total weight of the filler, of particles having a dso greater than or equal to 0,05μm and strictly less than 8μm, and
- between 0% and 90% in weight, in respect with the total weight of the filler, of particles having a dso greater than or equal to 8μm and strictly less than 200μm.

EP 4 311 815 A1

(52) Cooperative Patent Classification (CPC): (Cont.)

C-Sets
**C04B 28/04, C04B 14/106, C04B 14/12,**
**C04B 14/14, C04B 14/16, C04B 14/28,**
**C04B 20/008, C04B 22/122, C04B 22/147,**
**C04B 24/02, C04B 24/2694, C04B 2103/40**

## Description

### Technical field

This disclosure pertains to the field of mortar and concrete formulations based on low carbon binders containing high volumes filler for preparing concrete or industrial mortars. The technical field of the invention relates to hydraulic mineral binders including at least one pozzolanic material, for instance a volcanic ash or a calcined clay, which are used in compositions able to set and harden, such as mortar or concrete compositions.

More particularly, the invention relates to binders and compositions able to set and harden for the building industry, which include at least one pozzolanic binder as well as at least one limestone filler of a given particle size distribution.

The invention concerns also the methods of preparation of these pozzolan-based binders, of these compositions able to set and harden.

The use of specific admixtures, whether mechanical performance enhancing or rheologically relevant, in such building applications are also in the field of the invention.

### Background Art

Portland cement production has a strong and negative impact on the environment due to the emissions of large quantities of carbon dioxide. The production of cement inherently generates $CO_2$ during the calcination of the raw materials at very high temperature (1450°C) in a kiln through decarbonation of the limestone (Eq. (1)):

$$CaCO_3\ (s) \rightarrow CaO\ (s) + CO_2\ (g) \quad (Eq.\ (1))$$

In addition, carbon dioxide is released as a result of the combustion of the fossil fuels needed to heat the cement kiln. By adding the additional emissions of grinding, almost one ton of $CO_2$ per ton of Portland cement is obtained. Overall, the cement industry is responsible for about 7 to 9% of the global carbon dioxide emissions.

Moreover, handling Portland cement may lead to health issues (such as allergy) due in particular to its high alkalinity (pH higher than 13). In addition, hazardous elements as hexavalent Chromium (Cr (VI)) may be released upon kneading, which is also unhealthy for the workers when it gets in contact with the skin. Although Cr (VI) reducing agents (as ferrous sulfate) are normally included in the cement powder, their efficiency is limited in time. Building workers, in particular those in the third world, are not expected to often check the deadline related to such treatments.

Most current research on new binders aims to replace cement in various applications by binders with lower environmental impact. One route is through using resources with limited treatment, such as naturally occurring pozzolans, either from volcanic or sedimentary origins as well as artificially produced pozzolans, such as calcined clays. When ground into fine powder one can obtain a cementitious material that can be used in partial substitution of cement or used alone by adding some chemical activators.

It is important to note that the use of a pozzolan, whether natural or artificial, is not only environmentally friendly but also leads to several enhanced properties when it's used to formulate mortars and concretes, such as high resistance to sulfate attack, low permeability, good resistance in a chemically aggressive environment, low heat of hydration (required in massive structures), excellent durability in general, possibility of immobilization of heavy metals or radionuclides, etc.

In this context, the invention aims at addressing at least one of the above problems and/or needs, through fulfilling at least one of the following objectives:

-O1- Providing a binder composition, a mortar composition or a concrete composition including pozzolan and ground limestone, which are attractive substitutes to Ordinary Portland Cement (OPC)-based compositions.

-O2- Providing a binder composition, a mortar composition or a concrete composition including pozzolan and ground limestone, which is environmentally friendly.

-O3- Providing a binder composition, a mortar composition or a concrete composition including pozzolan and ground limestone, which is more acceptable than OPC-based compositions, with respect to the health and safety issues.

-O4- Providing a binder composition, a mortar composition or a concrete composition including pozzolan and ground limestone, which gives rise to dry-mortars, dry and semi-dry precast concrete and wet mortars and wet concrete formulations with appropriate ability to be manufactured by several ways, like vibro-compaction, spraying, trowelling, casting, etc.

-O5- Providing a binder composition, a mortar or a concrete composition including pozzolan and ground limestone, which gives rise to wet formulations with appropriate rheological properties, i.e stable rheology (good workability) during the usual setting time (e.g. from some minutes to several hours) required by the users of said wet formulation.

-O6- Providing a binder composition, a mortar composition or a concrete composition including pozzolan and ground limestone, which gives rise to a hardened material with required mechanical properties, especially an acceptable early strength (for instance 24 hours).

-O7- Providing a binder composition, a mortar composition or a concrete composition including pozzolan and ground limestone, which gives rise to a hardened material with required durability.

-O8- Providing a binder composition, a mortar composition or a concrete composition including pozzolan and ground limestone, which gives rise to a hardened material with the usually required setting time (e.g. from some minutes to several hours).

-O9- Providing a simple and cheap method of preparation of the binder composition composition, the mortar composition or the concrete composition including pozzolan and ground limestone, which complies with at least one of the objectives -O1- to -O8-.

-O10- Providing a simple and cheap method of preparation of a wet form of the binder composition, a wet mortar composition, or a wet concrete composition including pozzolan and ground limestone.

-O11- Providing hardened products for the building industry including pozzolan and ground limestone as at least partial binder.

**Summary**

At least one of the above objectives is reached thanks to a binder composition comprising:

a. between 10% and 49% in dry weight of a clinker source, a lime source or a mixture thereof;

b. between 10% and 49% in dry weight of at least one pozzolanic material;

c. between 21% and 80% in dry weight of at least one filler;

d. between 0.1% and 10% in dry weight, relative to the total weight of components a, b and c, of at least one activator;

e. between 0.05% and 1.5% in dry weight, relative to the total weight of components a, b and c, of at least one rheology enhancing admixture;

said filler being a particles mixture of:

- between 10% and 100% in weight, in respect with the total weight of the filler, of particles having a $d_{50}$ greater than or equal to 0.05 μm and strictly less than 8 μm, and
- between 0% and 90% in weight, in respect with the total weight of the filler, of particles having a $d_{50}$ greater than or equal to 8 μm and strictly less than 200 μm,

wherein the rheology enhancing admixture comprises

(E1) at least one water reducing polymer;
(E2) optionally a wetting agent and/or a surfactant;

said water reducing polymer (E1) being a polyethylene glycol bearing terminal phosphonate groups and/or a copolymer comprising the following monomeric units:

- units UA

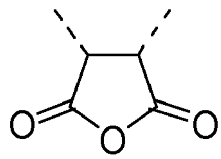

- units UB

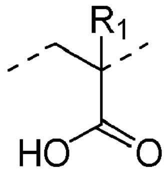

- units UC

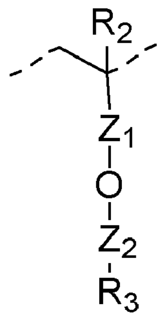

- units UD

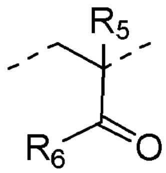

wherein: - - - represents a bonding site of a monomeric unit

the quantity of monomeric units UA is between 0 and 40 mol%,

the quantity of monomeric units UB is between 25 and 95 mol%,

the quantity of monomeric units UC is between 5 and 50 mol%,

the quantity of monomeric units UD is between 0 and 25 mol%,

$R_1$ and $R_2$ are independently hydrogen or methyl,

$Z_1$ is a bond, a methyl or an ethyl,

Z2 is a bond, $-CH_2CH_2O-$, $-CH_2CH_2OCH_2CH_2O-$ or $-CH_2CH_2CH_2CH_2O-$

$R_3$ is $-(CH_2CH_2O)_m-R_4$, $-(CH(CH_3)CH_2O)_n-R_4$ or $-(CH_2CH_2OCH(CH_3)CH_2O)y-R_4$,

m, n and y being an integer independently comprised between 7 and 100,

$R_4$ is hydrogen, methyl,

$R_5$ is hydrogen, methyl or $-CH_2COOH$, and

$R_6$ is -OH, $-OCH_2OH$, $-OCH_2CH_2OH$, $-OCH_2CH_2CH_2OH$, $-OCH_2CH(CH_3)CH_2OH$, - $OCH_2CH_2CH_2CH_2OH$, $-NHR_7$, a group bearing a phosphate function, a group bearing phosphonate function or a group bearing sulfonate function,

$R_7$ being a saturated or unsaturated, linear or branched chain comprising from 2 to 12 carbon atoms and eventually one or more heteroatoms, preferably O, N or S,

wherein the wetting agent and/or the surfactant decreases the surface tension of water below 68 $mN.m^{-1}$ and wherein the wetting agent is selected in the group comprising, preferably consisting of, glycol compounds and having a molecular weight comprised between 60 $g.mol^{-1}$ and 130 $g.mol^{-1}$, and wherein the surfactant have a molecular weight comprised between 131 $g.mol^{-1}$ and 300 $g.mol^{-1}$.

The invention also concerns a dry concrete composition or a dry industrial mortar composition, in particular tile adhesive, coating, assembling mortars, repair mortars, renders, technical mortars and mortars for floor covering comprising at least one aggregate and the binder composition described above.

The invention further concerns a wet concrete composition or a wet industrial mortar composition, in particular tile adhesive, coating, assembling mortars, repair mortars, renders, technical mortars and mortars for floor covering comprising at least one aggregate, the binder composition described above and water.

The invention is in addition directed to a hardened concrete composition or a hardened industrial mortar composition obtained from the wet concrete composition or the wet industrial mortar composition described above.

Moreover, the invention concerns a process for preparing the wet concrete composition or the wet industrial mortar composition as described above comprising a step of mixing with water, at least one aggregate and the binder composition as described above, the binder composition being prepared before the mixing step or in situ during the mixing step from at least some of the different components of the binder composition taken separately and/or under the form of premix(es).

The invention relates to a use of the binder composition as described above for improving the fresh state rheology, for instance fresh state yield stress and fresh state viscosity, of wet concrete composition or wet industrial mortar composition in particular tile adhesive, coating, assembling mortars, repair mortars, renders, technical mortars and mortars for floor covering.

**Definitions**

According to the terminology of this text, the following non limitative definitions have to be taken into consideration:

"Pozzolanic material" is understood as meaning a powdery substance that hardens by adding a mixture of water and a CaO source, either from natural origin or derived from a natural resource to which a temperature controlled treatment was applied.

"filler" refers to a material whose primary role in a binder is physical rather than chemical. Fillers occupy pore spaces and are used as substitutes for hydraulic binders and supplementary cementitious materials as they are less energy intensive. Here the term refers to ground limestone, ground dolomite, marble powder, siliceous sands, recycled concrete fine aggregates or a mixture thereof.

"binder" refers to "hydraulic binder" meaning any material that hardens just by adding water, like cement.

"cement" is understood as meaning a powdery substance made for use in making mortar or concrete. They are mineral binders, possibly free from any organic compound. It refers to any ordinary cement and it includes Ordinary Portland Cement, blends of Ordinary Portland Cement, Pozzolanic materials and/or Filler and alkali-activated based cements.

"clinker" is understood as the main constituent phase of Ordinary Portland Cement obtained from the co-calcination of limestone and an aluminosilicate source.

"mortar" refers to a material composed of binder(s), aggregates such as sand and other components, like admixtures.

"Dry concrete" refers to a material composed of binder(s), aggregates such as sand and gravel and other components, like admixtures. "Wet concrete" refers to a material composed of binder(s), aggregates such as sand and gravel and other components, like admixtures and water. "Hardened concrete" refers to the hardened product obtained from wet concrete after reaction and evaporation of the water.

"$d_{50}$" gives the median size of the granulometric distribution of material's particles (usually in micrometers for

cementation materials). It means that 50% of the particles have a size less than the $d_{50}$ number and 50% of the particles have a size greater than the $d_{50}$ number. The measurement of $d_{50}$ is done by Laser diffraction analysis, also known as Laser diffraction spectroscopy, by means of Laser diffraction analyzer such as "Mastersizer 2000" and commercialized by the MALVERN company, with the humid way method.

## Detailed description

*The binder composition*

The binder composition according to the invention comprises:

a. between 10% and 49% in dry weight of a clinker source, a lime source or a mixture thereof;

b. between 10% and 49% in dry weight of at least one pozzolanic material;

c. between 21% and 80% in dry weight of at least one filler;

d. between 0.1% and 10% in dry weight, relative to the total weight of components a, b and c, of at least one activator;

e. between 0.05% and 1.5% in dry weight, relative to the total weight of components a, b and c, of at least one rheology enhancing admixture;

said filler being a particles mixture of:

- between 10% and 100% in weight, in respect with the total weight of the filler, of particles having a $d_{50}$ greater than or equal to 0.05 μm and strictly less than 8 μm, and
- between 0% and 90% in weight, in respect with the total weight of the filler, of particles having a $d_{50}$ greater than or equal to 8 μm and strictly less than 200 μm,

wherein the rheology enhancing admixture comprises

(E1) at least one water reducing polymer;
(E2) optionally a wetting agent and/or a surfactant;

said water reducing polymer (E1) being a polyethylene glycol bearing terminal phosphonate groups and/or a copolymer comprising the following monomeric units:

- units UA

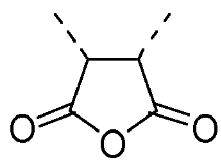

- units UB

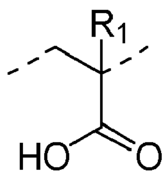

- units UC

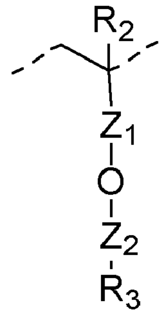

- units UD

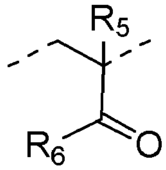

wherein: - - - represents a bonding site of a monomeric unit

the quantity of monomeric units UA is between 0 and 40 mol%,

the quantity of monomeric units UB is between 25 and 95 mol%,

the quantity of monomeric units UC is between 5 and 50 mol%,

the quantity of monomeric units UD is between 0 and 25 mol%,

$R_1$ and $R_2$ are independently hydrogen or methyl,

$Z_1$ is a bond, a methyl or an ethyl,

Z2 is a bond, $-CH_2CH_2O-$, $-CH_2CH_2OCH_2CH_2O-$ or $-CH_2CH_2CH_2CH_2O-$

$R_3$ is $-(CH_2CH_2O)_m-R_4$, $-(CH(CH_3)CH_2O)_n-R_4$ or $-(CH_2CH_2OCH(CH_3)CH_2O)y-R_4$,

m, n and y being an integer independently comprised between 7 and 100,

$R_4$ is hydrogen, methyl,

$R_5$ is hydrogen, methyl or $-CH_2COOH$, and

$R_6$ is -OH, $-OCH_2OH$, $-OCH_2CH_2OH$, $-OCH_2CH_2CH_2OH$, $-OCH_2CH(CH_3)CH_2OH$, - $OCH_2CH_2CH_2CH_2OH$, $-NHR_7$, a group bearing a phosphate function, a group bearing phosphonate function or a group bearing sulfonate function,

$R_7$ being a saturated or unsaturated, linear or branched chain comprising from 2 to 12 carbon atoms and eventually one or more heteroatoms, preferably O, N or S,

wherein the wetting agent and/or the surfactant decreases the surface tension of water below 68 $mN.m^{-1}$ and wherein the wetting agent is selected in the group comprising, preferably consisting of, glycol compounds and having a molecular weight comprised between 60 $g.mol^{-1}$ and 130 $g.mol^{-1}$, and wherein the surfactant have a molecular weight comprised between 131 $g.mol^{-1}$ and 300 $g.mol^{-1}$.

*The component a*

The binder composition according to the invention comprises between 10% and 49% in dry weight of a component a. In preferred embodiments, the binder composition according comprises between 11% and 40% in dry weight of a component a and preferably between 15% and 30%.

According to the invention, component a is a clinker source, a lime source or a mixture thereof. In preferred embodiments, said clinker source is Portland clinker, Portland cement or mixture thereof and said lime source is lime, natural hydraulic lime or a mixture thereof.

*The component b*

The binder composition according to the invention comprises between 10% and 49% in dry weight of a component b. In preferred embodiments, the binder composition according comprises between 11% and 40% in dry weight of a component b and preferably between 12% and 30%.

According to the invention, component b is a pozzolanic material. A pozzolanic material is a material which is able to react with lime or cement, in the presence of water, so as to produce hydrates. In other words, a pozzolanic material is a material that enhances the hydraulic behavior of Portland cement and lime, a hydraulic behavior being the capacity of setting and hardening in the presence of water.

Preferably, the pozzolanic material is selected in the group comprising, preferably consisting of, silica fumes, natural pozzolan, volcanic ash, pumice, zeolitized tuff, argilised tuff, fly ashes, calcinated schists, metakaolin, calcined clays in particular illite, bentonite, montmorillonite, smectite, biomass ashes, rice husk ashes, diatomaceous earth, waste glass powder, grounded opal, carbonated basic oxygen furnace slag, carbonated olivine, carbonated wollastonite and mixtures thereof.

*The component c*

The binder composition according to the invention comprises between 21% and 80% in dry weight of a component c. In preferred embodiments, the binder composition according comprises between 30% and 70% in dry weight of a component c and preferably between 45% and 65%.

According to the invention, component c is a filler, a filler is an inorganic material finely granulated which is inert. In other words, a filler is not able to react with lime or cement, in the presence of water, so as to produce hydrates.

Preferably, the filler is a limestone filler, more preferably, the filler is a natural material sourcing from stone-pit, such as calcite and its polymorphs, like aragonite or vaterite, and dolomite or precipitated calcium carbonates and mixtures thereof.

According to the invention, the filler is a particles mixture of:

- between 10% and 100% in weight, in respect with the total weight of the filler, of particles having a $d_{50}$ greater than or equal to 0.05 $\mu$m and strictly less than 8 $\mu$m, and
- between 0% and 90% in weight, in respect with the total weight of the filler, of particles having a $d_{50}$ greater than or equal to 8 $\mu$m and strictly less than 200 $\mu$m.

This filler partition allows obtaining a technical effect of reducing the viscosity and increasing the compressive strength of the binder composition and of the concrete or industrial mortars according to the invention.

In some embodiments the filler is a particles mixture of:

- between 20% and 80%, preferably between 25% and 50%, more preferably between 30% and 40% in weight, in respect with the total weight of the filler, of particles having a $d_{50}$ greater than or equal to 0.05 $\mu$m and strictly less than 8 $\mu$m, and
- between 20% and 80%, preferably between 30% and 70%, more preferably between 40% and 65% in weight, in respect with the total weight of the filler, of particles having a $d_{50}$ greater than or equal to 8 $\mu$m and strictly less than 200 $\mu$m.

*The component d*

According to the invention, the binder composition further comprises between 0.1% and 10% in dry weight, relative to the total weight of components a, b and c, of at least one activator.

The content of the activator is determined in respect with the distribution of components a, b and c. In other words, the dry weight percentage of the activator is determined by considering that the sum of contents of components

a, b and c represents 100% in dry weight.

Preferably, the activator is an alkaline metal salt, an alkanolamine or mixture thereof, preferably said alkaline metal salt is selected in the group comprising, more preferably consisting of, sodium chloride, potassium chloride, lithium chloride, sodium sulfate, potassium sulfate, lithium sulfate, sodium carbonate, potassium carbonate, lithium carbonate, sodium nitrate, potassium nitrate, lithium nitrate, sodium nitrite, potassium nitrite, lithium nitrite, calcium nitrate, calcium nitrite, sodium thiocyanate, potassium thiocyanate, lithium thiocyanate and mixtures thereof, preferably said alkanolamine is selected in the group comprising, more preferably consisting of, triethanolamine (TEA), triisopropanolamine (TIPA), diethanolamine (DEA) or mixture thereof. In a particularly preferred embodiments, the activator is selected in the group comprising, more preferably consisting of, sodium sulfate, TIPA and mixtures thereof.

*The component e*

According to the invention, the binder composition further comprises between 0.05% and 1.5% in dry weight, relative to the total weight of components a, b and c, of at least one rheology enhancing admixture.

In the sense of the invention, "rheology enhancing admixture" means a single compound or a mixture of compounds which is used for controlling mixability, rheology and/or open time of a wet concrete composition or a wet mortar composition including at least a binder composition, aggregates and water.

The content of the rheology enhancing admixture is determined in respect with the distribution of components a, b and c. In other words, the dry weight percentage of the rheology enhancing admixture is determined by considering that the sum of contents of components a, b and c represents 100% in dry weight.

According to the invention, the water reducing polymer (E1) is a copolymer comprising the following monomeric units:

- units UA

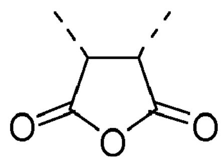

- units UB

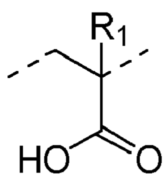

- units UC

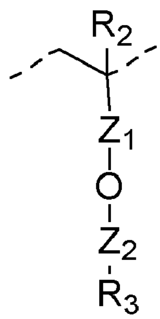

- units UD

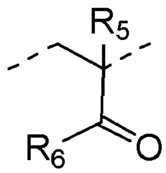

wherein: - - - represents a bonding site of a monomeric unit

the quantity of monomeric units UA is between 0 and 40 mol%,

the quantity of monomeric units UB is between 25 and 95 mol%,

the quantity of monomeric units UC is between 5 and 50 mol%,

the quantity of monomeric units UD is between 0 and 25 mol%,

$R_1$ and $R_2$ are independently hydrogen or methyl,

$Z_1$ is a bond, a methyl or an ethyl,

Z2 is a bond, $-CH_2CH_2O-$, $-CH_2CH_2OCH_2CH_2O-$ or $-CH_2CH_2CH_2CH_2O-$

$R_3$ is $-(CH_2CH_2O)_m-R_4$, $-(CH(CH_3)CH_2O)_n-R_4$ or $-(CH_2CH_2OCH(CH_3)CH_2O)_y-R_4$

m, n and y being an integer independently comprised between 7 and 100,

$R_4$ is hydrogen, methyl,

$R_5$ is hydrogen, methyl or $-CH_2COOH$, and

$R_6$ is $-OH$, $-OCH_2OH$, $-OCH_2CH_2OH$, $-OCH_2CH_2CH_2OH$, $-OCH_2CH(CH_3)CH_2OH$, - $OCH_2CH_2CH_2CH_2OH$, $-NHR_7$, a group bearing a phosphate function, a group bearing phosphonate function or a group bearing sulfonate function,

$R_7$ being a saturated or unsaturated, linear or branched chain comprising from 2 to 12 carbon atoms and eventually one or more heteroatoms, preferably O, N or S.

In an embodiment, the sum of the quantity of monomeric units UA, the quantity of monomeric units UB, the quantity of monomeric units UC, the quantity of monomeric units UD is equal to 100 mol%.

In another embodiment, the water reducing polymer (E1) comprise at least another monomeric unit in a quantity of up to 20 mol%. Preferably, the at least another monomeric unit results from the polymerization of any unsaturated monomer which can be copolymerized with any of the monomers contained in the PCE with the proviso that the resulting polymer cannot be one of the Tempo range of ViscoCrete® superplasticizer, manufactured by Sika®.

Preferably, the quantity of monomeric units UA is between 5 and 35 mol%, more preferably between 10 and 30 mol% and even more preferably between 15 and 25 mol%.

Preferably, the quantity of monomeric units UB is between 25 and 95 mol%, more preferably between 35 and 80 mol% and even more preferably between 45 and 65 mol%.

Preferably, the quantity of monomeric units UC is between 5 and 50 mol%, more preferably between 15 and 40 mol% and even more preferably between 20 and 30 mol%.

Preferably, the quantity of monomeric units UD is between 0 and 25 mol%, more preferably between 5 and 20 mol% and even more preferably between 10 and 15 mol%.

In embodiments wherein the water reducing polymer (E1) comprises phosphate functions, at least a part of the unities derived from a carboxylic acid monomer are substituted with a phosphate.

In embodiments wherein the water reducing polymer (E1) comprises phosphonate functions, at least a part of the unities derived from a carboxylic acid monomer are substituted with a phosphonate.

Preferably, the water reducing polymer (E1) is anionic, cationic or zwitterionic.

Preferably, the water reducing polymer has a molecular weight by weight comprised between 5 000 $g.mol^{-1}$ and 300000 $g.mol^{-1}$.

In an embodiment the water reducing polymer (E1) is a HPEG. HPEG are copolymers derived from (meth)acrylic acid, itaconic acid monomers and from ω-hydroxy-α-methallyl poly(ethylene glycol) macromonomers or ω-methoxy-α-methallyl poly(ethylene glycol).

In this embodiment, the water reducing polymer (E1) is a copolymer comprising the following monomeric units:

- units UB

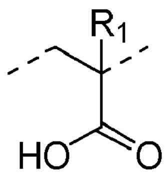

- units UC

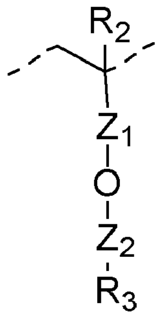

- units UD

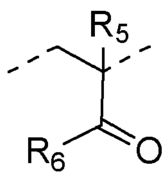

wherein: - - - represents a bonding site of a monomeric unit

the quantity of monomeric units UB is between 25 and 95 mol%,

the quantity of monomeric units UC is between 5 and 50 mol%,

the quantity of monomeric units UD is between 0 and 25 mol%,

$R_1$ is hydrogen or methyl,

R2 is hydrogen

$Z_1$ is a methyl,

Z2 is a bond,

$R_3$ is $-(CH_2CH_2O)_m-R_4$, $-(CH(CH_3)CH_2O)_n-R_4$ or $-(CH_2CH_2OCH(CH_3)CH_2O)_y-R_4$

m, n and y being an integer independently comprised between 7 and 100,

$R_4$ is hydrogen or methyl,

$R_5$ is hydrogen, methyl or $-CH_2COOH$, and

$R_6$ is $-OH$, $-OCH_2OH$, $-OCH_2CH_2OH$, $-OCH_2CH_2CH_2OH$, $-OCH_2CH(CH_3)CH_2OH$, $-OCH_2CH_2CH_2CH_2OH$, $-NHR_7$, a group bearing a phosphate function, a group bearing phosphonate function or a group bearing sulfonate function,

$R_7$ being a saturated or unsaturated, linear or branched chain comprising from 2 to 12 carbon atoms and eventually one or more heteroatoms, preferably O, N or S.

In this embodiment, preferably, the quantity of monomeric units UB is between 25 and 95 mol%, more preferably between 35 and 80 mol% and even more preferably between 45 and 65 mol%, the quantity of monomeric units UC is between 5 and 50 mol%, more preferably between 15 and 40 mol% and even more preferably between 20 and 30 mol% and, the quantity of monomeric units UD is between 1 and 25 mol%, more preferably between 5 and 20 mol% and even more preferably between 10 and 15 mol%.

In another embodiment, the water reducing polymer (E1) is an APEG. APEG are block copolymer of A-B-A-B type, wherein A unities are derived from maleic acid monomers and B unities are derived from ω-hydroxy-α-allyl poly(ethylene glycol) macromonomers.

In this embodiment, the water reducing polymer (E1) is a copolymer comprising the following monomeric units:

- units UA

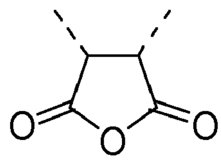

- units UB

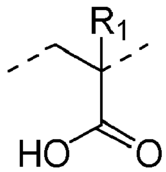

- units UC

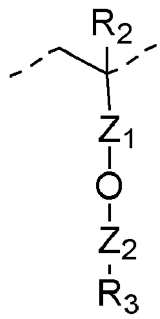

- units UD

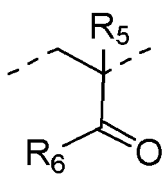

wherein: - - - represents a bonding site of a monomeric unit

the quantity of monomeric units UA is between 0 and 40 mol%,

the quantity of monomeric units UB is between 25 and 95 mol%,

the quantity of monomeric units UC is between 5 and 50 mol%,

the quantity of monomeric units UD is between 0 and 25 mol%,

$R_1$ is hydrogen or methyl,

R2 is hydrogen

$Z_1$ is a methyl,

Z2 is a bond,

$R_3$ is $-(CH_2CH_2O)_m-R_4$, $-(CH(CH_3)CH_2O)_n-R_4$ or $-(CH_2CH_2OCH(CH_3)CH_2O)_y-R_4$

m, n and y being an integer independently comprised between 7 and 100,

$R_4$ is hydrogen, methyl,

$R_5$ is hydrogen, methyl or $-CH_2COOH$, and

$R_6$ is -OH, $-OCH_2OH$, $-OCH_2CH_2OH$, $-OCH_2CH_2CH_2OH$, $-OCH_2CH(CH_3)CH_2OH$, - $OCH_2CH_2CH_2CH_2OH$, $-NHR_7$, a group bearing a phosphate function, a group bearing phosphonate function or a group bearing sulfonate function,

$R_7$ being a saturated or unsaturated, linear or branched chain comprising from 2 to 12 carbon atoms and eventually one or more heteroatoms, preferably O, N or S.

In this embodiment, preferably, the quantity of monomeric units UA is between 5 and 35 mol%, more preferably between 10 and 30 mol% and even more preferably between 15 and 25 mol%, preferably, the quantity of monomeric units UB is between 25 and 95 mol%, more preferably between 35 and 80 mol% and even more preferably between 45 and 65 mol%, the quantity of monomeric units UC is between 5 and 50 mol%, more preferably between 15 and 40 mol% and even more preferably between 20 and 30 mol% and, the quantity of monomeric units UD is between 1 and 25 mol%, more preferably between 5 and 20 mol% and even more preferably between 10 and 15 mol%.
In another embodiment, the water reducing polymer (E1) is a VPEG. VPEG are vinyl ether-based PCEs.
In this embodiment, the water reducing polymer (E1) is a copolymer comprising the following monomeric units:

- units UB

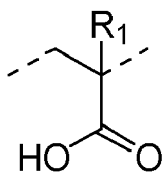

- units UC

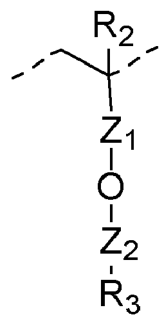

- units UD

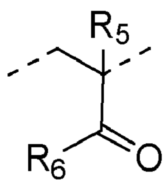

wherein: - - - represents a bonding site of a monomeric unit

the quantity of monomeric units UB is between 25 and 95 mol%,

the quantity of monomeric units UC is between 5 and 50 mol%,

the quantity of monomeric units UD is between 0 and 25 mol%,

$R_1$ is hydrogen or methyl,

R2 is hydrogen

$Z_1$ is a bond,

Z2 is a bond, $-CH_2CH_2O-$, $-CH_2CH_2OCH_2CH_2O-$ or $-CH_2CH_2CH_2CH_2O-$

$R_3$ is $-(CH_2CH_2O)_m-R_4$, $-(CH(CH_3)CH_2O)_n-R_4$ or $-(CH_2CH_2OCH(CH_3)CH_2O)_y-R_4$

m, n and y being an integer independently comprised between 7 and 100,

$R_4$ is hydrogen, methyl,

$R_5$ is hydrogen, methyl or $-CH_2COOH$, and

$R_6$ is -OH, $-OCH_2OH$, $-OCH_2CH_2OH$, $-OCH_2CH_2CH_2OH$, $-OCH_2CH(CH_3)CH_2OH$, - $OCH_2CH_2CH_2CH_2OH$, $-NHR_7$, a group bearing a phosphate function, a group bearing phosphonate function or a group bearing sulfonate function,

$R_7$ being a saturated or unsaturated, linear or branched chain comprising from 2 to 12 carbon atoms and eventually one or more heteroatoms, preferably O, N or S.

In this embodiment, preferably, the quantity of monomeric units UB is between 25 and 95 mol%, more preferably between 35 and 80 mol% and even more preferably between 45 and 65 mol%, the quantity of monomeric units UC is between 5 and 50 mol%, more preferably between 15 and 40 mol% and even more preferably between 20 and 30 mol% and, the quantity of monomeric units UD is between 1 and 25 mol%, more preferably between 5 and 20 mol% and even more preferably between 10 and 15 mol%.
In another embodiment, the water reducing polymer (E1) is an IPEG. IPEG are copolymers derived from acrylic acid monomers and from isoprenol poly(ethylene glycol) macromonomers.

In this embodiment, the water reducing polymer (E1) is a copolymer comprising the following monomeric units:

- units UB

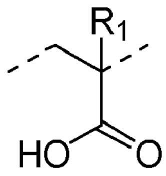

- units UC

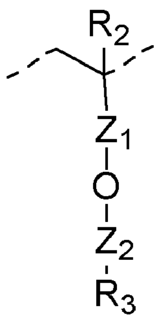

- units UD

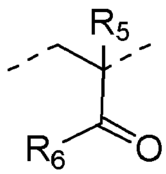

wherein: - - - represents a bonding site of a monomeric unit

the quantity of monomeric units UB is between 25 and 95 mol%,

the quantity of monomeric units UC is between 5 and 50 mol%,

the quantity of monomeric units UD is between 0 and 25 mol%,

$R_1$ is hydrogen or methyl,

R2 is hydrogen

$Z_1$ is an ethyl,

Z2 is a bond,

$R_3$ is $-(CH_2CH_2O)_m-R_4$, $-(CH(CH_3)CH_2O)_n-R_4$ or $-(CH_2CH_2OCH(CH_3)CH_2O)_y-R_4$

m, n and y being an integer independently comprised between 7 and 100,

$R_4$ is hydrogen or methyl,

$R_5$ is hydrogen, methyl or $-CH_2COOH$, and

$R_6$ is -OH, $-OCH_2OH$, $-OCH_2CH_2OH$, $-OCH_2CH_2CH_2OH$, $-OCH_2CH(CH_3)CH_2OH$, - $OCH_2CH_2CH_2CH_2OH$, $-NHR_7$, a group bearing a phosphate function, a group bearing phosphonate function or a group bearing sulfonate function,

$R_7$ being a saturated or unsaturated, linear or branched chain comprising from 2 to 12 carbon atoms and eventually one or more heteroatoms, preferably O, N or S.

In this embodiment, preferably, the quantity of monomeric units UB is between 25 and 95 mol%, more preferably between 35 and 80 mol% and even more preferably between 45 and 65 mol%, the quantity of monomeric units UC is between 5 and 50 mol%, more preferably between 15 and 40 mol% and even more preferably between 20 and 30 mol% and, the quantity of monomeric units UD is between 1 and 25 mol%, more preferably between 5 and 20 mol% and even more preferably between 10 and 15 mol%..

According to the invention, the rheology enhancing admixture optionally comprises a wetting agent and/or a surfactant. The wetting agent as well as the surfactant decreases the surface tension of water below 68 $mN.m^{-1}$ and wherein the wetting agent is selected in the group comprising, preferably consisting of, glycol compounds and having a molecular weight comprised between 60 $g.mol^{-1}$ and 130 $g.mol^{-1}$, and wherein the surfactant have a molecular weight comprised between 131 $g.mol^{-1}$ and 300 $g.mol^{-1}$.

The wetting agent and the surfactant may be cationic, anionic or non-ionic, preferably non-ionic. Is considered non-ionic, a species that presents an overall neutral electrical charge, i.e. having the same number of positive charge(s) and negative charge(s), or the total absence of any positive or negative electrical charge.

In preferred embodiments, the wetting agent as well as the surfactant decreases the surface tension of water below 68 $mN.nr^{-1}$,, and wherein the wetting agent is selected in the group comprising, preferably consisting of, glycol compounds and having a molecular weight comprised between 60 $g.mol^{-1}$ and 130 $g.mol^{-1}$, and wherein the surfactant have a molecular weight comprised between 131 $g.mol^{-1}$ and 300 $g.mol^{1}$.The decrease of the surface tension is measured by the following method:

- preparing a solution S1 of the wetting agent or the surfactant at a concentration of 0.5 $g.L^{-1}$ in deionized water
- measuring the surface tension of the solution S1 with the Du Nouy ring method,
- measuring the surface tension of the deionized water with the same Du Nouy ring method at the same temperature and pressure.
- Calculating the percentage of variation of the surface tension between the deionized water and the solution S1.

In preferred embodiment, the wetting agent is selected in the group comprises, preferably consisting of, 2-methyl-2,4-pentanediol (MPD), diethylene glycol (DEG), neopentyl glycol (NPG) and mixtures thereof.

In preferred embodiment, the surfactant may be, 2,4,7,9-tétraméthyldec-5-yne-4,7diol.

*The dry concrete composition or dry industrial mortar composition*

The invention also relates to dry concrete composition or dry industrial mortar composition, in particular tile adhesive, coating, assembling mortars, repair mortars, renders, technical mortars and mortars for floor covering comprising at least one aggregate and the binder composition described above. The dry concrete or industrial mortar composition may eventually contain other admixtures and additions.

According to the invention, "dry" concrete composition or "dry" industrial mortar composition refers to composition that are in the form of powder and ready to be mixed with water. In other words, the dry concrete composition or dry industrial mortar composition of the invention may content some moisture, but it essentially contains solid components which are intended to be mixed with water before its application.

Aggregates comprise a large category of particulate material used in construction, including sands, gravels, crushed stones, slag (not-granulated), recycled concrete and geosynthetic aggregates. They serve as reinforcement to add strength to the overall composite material.

Advantageously, said dry concrete composition or dry industrial mortar composition can also include, apart from aggregates, one or several ingredients, especially functional admixtures, additions and fibres, which can be the other optional component mentioned below.

*Optional other components*

The binder composition is advantageously enriched with one or several other components which are ingredients,

notably functional additives preferably selected in the following list:

• *Water retention agent.*

A water retention agent has the property to keep the water of mixing before the setting. The water is so trapped in the wet formulation paste which improves its bond. To some extent, the water is less absorbed by the support.
The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

• *Rheological agent*

The possible rheological agent (also named a "thickener") is preferably chosen in the group comprising, more preferably consisting of: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

• *Defoamer/Antifoams*

The possible defoamer is preferably chosen in the group comprising, more preferably consisting of: polyether polyols and mixes thereof.

• *Biocide*

The possible biocide is preferably chosen in the group comprising, more preferably consisting of: mineral oxides like zinc oxide and mixes thereof.

• *Pigment*

The possible pigment is preferably chosen in the group comprising, more preferably consisting of: $TiO_2$, iron oxide and mixes thereof.

• *Flame retardant*

Flame retardant (or flame proof agent) makes it possible to increase the fire resistance and/or to shrink the speed of flame spreading of the composition.

• *Air-entraining agents*

Air-entraining agents (surfactants) are advantageously chosen in the group comprising, more preferably consisting of, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting of, the sulfonate olefins, the sodium lauryl sulfate and their mixes.

• *Retarders*

Retarders are advantageously chosen in the group comprising, more preferably consisting of, tartric acid and its salts: sodium or potassium salts, citric acid and its salts: sodium (trisodic citrate) and their mixes.
In addition, other components may be:

- *Plasticizers*
- *Fibres*
- *Dispersion powders*
- *Polymeric resins*

- *Complexing agents*

- *Drying shrinkage reducing agents based on polyols.*

The total content of these optional other components in the dry concrete composition or dry industrial mortar composition is preferably comprised between 0.1% and 10% by weight of the total weight of the dry concrete composition or dry industrial mortar composition.

*The wet concrete composition or wet industrial mortar composition*

The invention also refers to a wet concrete composition or wet industrial mortar composition in particular tile adhesive, coating, assembling mortars, repair mortars, renders, technical mortars and mortars for floor covering comprising at least one aggregate, the binder composition described above and water.

In a specific embodiment, wet mortar compositions are so called "Ready to use" mortars. "Ready to use" mortars are used for assembling bricks or blocks on building site. They are obtained by mixing all the elements of the composition (binder, aggregates and others components) with water directly at the mixing plant. They include a set retarding agent, allowing transport and delayed use up to several days, while maintaining its rheological and hardening properties.

*The process for preparing wet concrete composition or wet mortar composition*

The invention also relates to a process for preparing the wet concrete composition or wet industrial mortar composition described above comprising a step of mixing with water at least one aggregate and the binder composition described above, the binder composition being prepared before the mixing step or in situ during the mixing step from at least some of the different components of the binder composition taken separately and/or under the form of premix(es).

In other words, wet concrete composition or wet industrial mortar composition could be prepared by two distinct methods.

In a first method, the binder composition is prepared, and then mixed with the at least one aggregate. The dry concrete composition or dry mortar composition is thereafter mixed with water.

In a second method, the wet concrete composition or wet industrial mortar composition is prepared by mixing in water each component of the binder composition and the aggregates.

According to the present disclosure, the term "mixing" has to be understood as any form of mixing.

In a preferred embodiment a part of the binder composition and at least a part of the water are mixed together prior to the mixing with the aggregate.

In a preferred embodiment, the process is implemented with a ratio water to binder composition comprised between 0.1 and 0.5, advantageously between 0.15 and 0.45, and more advantageously between 0.2 and 0.4.

*Hardened concrete composition or hardened industrial mortar composition*

The present invention also refers to hardened concrete composition or hardened industrial mortar composition obtained from the wet concrete composition or wet industrial mortar composition described above.

*The use of the binder composition*

The invention is also directed to the use of the binder composition described above for improving the fresh state rheology, for instance fresh state yield stress and fresh state viscosity, of wet concrete composition or wet industrial mortar composition in particular tile adhesive, coating, assembling mortars, repair mortars, renders, technical mortars and mortars for floor covering.

Advantageously, for the use according to the invention, the mortar fresh state yield stress is comprised between 0 Pa and 200 Pa, advantageously between 5 Pa and 100 Pa and more advantageously between 30 Pa and 60 Pa.

Advantageously, for the use according to the invention, the paste fresh state viscosity is comprised between 0 Pa.s and 50 Pa.s, advantageously between 15 Pa.s and 35 Pa.s and more advantageously between 20 Pa.s and 30 Pa.s.

The invention is also directed to the use of the binder composition described above for the preparation of precast concrete or ready-mix concrete.

## Examples

*Example 1: the synergistic effect of $Na_2SO_4$ and TIPA on the mechanical performance*

A total of ten mortars were prepared, with aggregates according to standard NF EN 196-1, where the aggregates to binder, components a, b and c, weight ratio is set at 2.42. The compositions and resulting compressive strengths, determined according to NF EN 196-1 are set forth in table 1 below.

Table 1

| | | M1 | M2 | M3 | M4 | M5 | M6 | M7 | M8 | M9 | M10 |
|---|---|---|---|---|---|---|---|---|---|---|---|
| Component a (%dry weight) | Portland Cement | 19.2 | 19.2 | 19.2 | 19.2 | 19.2 | 19.2 | 19.2 | 19.2 | 19.2 | 19.2 |
| Component b (%dry weight) | Ground Pumice | 19.2 | 19.2 | 19.2 | 19.2 | 19.2 | 19.2 | 19.2 | 19.2 | 19.2 | 19.2 |
| Component c (%dry weight) | Fine limestone filler ($d_{50}$ < 4 μm) | 23.7 | 23.7 | 23.7 | 23.7 | 23.7 | 23.7 | 23.7 | 23.7 | 23.7 | 23.7 |
| | Coarse limestone filler ($d_{50}$ > 40 μm) | 37.9 | 37.9 | 37.9 | 37.9 | 37.9 | 37.9 | 37.9 | 37.9 | 37.9 | 37.9 |
| Water to components a, b and c weight ratio | | 0.3 | 0.3 | 0.3 | 0.3 | 0.3 | 0.3 | 0.3 | 0.3 | 0.3 | 0.3 |
| Component d (%dry weight relative to a, b and c) | $Na_2SO_4$ | - | - | 1.0 | 1.0 | 1.0 | 1.0 | 2.0 | 2.0 | 2.0 | 2.0 |
| | TIPA | - | 0.5 | - | 0.1 | 0.3 | 0.5 | - | 0.1 | 0.3 | 0.5 |
| Component e (%dry weight relative to a, b and c) | Marla RB1050 *(HPEG-based)* | 0.1 | 0.1 | 0.1 | 0.1 | 0.1 | 0.1 | 0.1 | 0.1 | 0.1 | 0.1 |
| Compressive strength (MPa) | 1 day | 6.6 | 5.9 | 9.0 | 9.9 | 9.6 | 10.7 | 8.6 | 9.4 | 10.4 | 11.7 |
| | 2 days | 10.0 | 10.5 | 12.3 | 12.6 | 12.6 | 13.5 | 11.6 | 11.9 | 12.9 | 14.1 |
| | 28 days | 24.7 | 25.1 | 24.0 | 25.3 | 25.6 | 26.8 | 25.5 | 12.9 | 25.9 | 26.6 |

As can be seen from table 1, compressive strengths of the mortar are largely affected by the activator type and combination.

Similar strength gains are observed at all ages when combined addition of $Na_2SO_4$ and TIPA is performed, especially when TIPA content is 0.5% with respect to components a, b and c and as well $Na_2SO_4$ content is set at either 1% (M6) or 2% (M10).

Thus, the adequate selection of activators allows for improving performance of the binder and resulting mortar.

*Example 2: effect of pozzolan source*

Six additional mortars were prepared according to standard NF EN 196-1 and following the same protocol as described in Example 1. The compositions and compressive strengths are set forth in table 2 below. Mortars M1 and M6 are reproduced in table 2.

Table 2

| | | M1 | M6 | M11 | M12 | M13 | M14 | M15 | M16 |
|---|---|---|---|---|---|---|---|---|---|
| Component a (%dry weight) | Portland Cement | 19.2 | 19.2 | 19.2 | 19.2 | 19.2 | 19.2 | 19.2 | 19.2 |
| Component b (%dry weight) | Ground pumice | 19.2 | 19.2 | - | - | - | - | - | - |
| | Volcanic ash | - | - | 19.2 | 19.2 | - | - | - | - |
| | Metakaolin | - | - | - | - | 19.2 | 19.2 | | |
| | Calcined Sediments | - | - | - | - | - | - | 19.2 | 19.2 |
| Component c (%dry weight) | Fine limestone filler ($d_{50}$ < 4 μm) | 23.7 | 23.7 | 23.7 | 23.7 | 23.7 | 23.7 | 23.7 | 23.7 |
| | Coarse limestone filler ($d_{50}$ > 40 μm) | 37.9 | 37.9 | 37.9 | 37.9 | 37.9 | 37.9 | 37.9 | 37.9 |
| Water to components a, b and c weight ratio | | 0.3 | 0.3 | 0.3 | 0.3 | 0.3 | 0.3 | 0.3 | 0.3 |
| Component d (%dry weight relative to a, b and c) | $Na_2SO_4$ | - | 1.0 | - | 1.0 | - | 1.0 | - | 1.0 |
| | TIPA | - | 0.5 | - | 0.5 | - | 0.5 | - | 0.5 |
| Component e (%dry weight relative to a, b and c) | *Marla RB1050 (HPEG-based)* | 0.1 | 0.1 | 0.1 | 0.1 | 0.1 | 0.1 | 0.1 | 0.1 |
| Compressive strength (MPa) | 1 day | 6.6 | 10.7 | 7.1 | 11.5 | 5.7 | 10.6 | 8.0 | 13.0 |
| | 2 days | 10.0 | 13.5 | 10.5 | 15.0 | N.D. * | N.D. * | 12.0 | 16.0 |
| | 28 days | 24.7 | 26.8 | 36.9 | 47.7 | 45.7 | 45.9 | 30.0 | 33.0 |
| *N.D.: Not Determined | | | | | | | | | |

As can be seen from table 2, the compressive strengths of the mortars, with or without the activators, are largely affected at 28 days by the source of pozzolan evaluated while they remain similar at one day, highlighting the predominance of Portland Cement reactivity at that stage.

Thus, combination of $Na_2SO_4$ and TIPA at the selected dosages, enable the improvement of mechanical performance at early age and at least on par performance at longer term (28 days).

*Example 3: rheological impact of unique limestone filler*

Four additional mortars were prepared using a third source of Natural Pozzolan and according to previously described protocol. The compositions, mortar spread and mechanical performance are set forth in table 3 below.

Table 3

| | | M17 | M18 | M19 | M20 |
|---|---|---|---|---|---|
| Component a (%dry weight) | Portland Cement | 19.2 | 19.2 | 19.2 | 19.2 |
| Component b (%dry weight) | Ground Pumice | 19.2 | 19.2 | 19.2 | 19.2 |
| Component c (%dry weight) | Fine limestone filler ($d_{50}$ < 4 μm) | 23.7 | 37.0 | 49.3 | 61.6 |
| | Coarse limestone filler ($d_{50}$ > 40 μm) | 37.9 | 24.6 | 12.3 | - |
| Water to components a, b and c weight ratio | | 0.3 | 0.3 | 0.3 | 0.3 |
| Component d (%dry weight relative to a, b and c) | $Na_2SO_4$ | 1.0 | 1.0 | 1.0 | 1.0 |
| | TIPA | 0.5 | 0.5 | 0.5 | 0.5 |

(continued)

| | | M17 | M18 | M19 | M20 |
|---|---|---|---|---|---|
| Component e (%dry weight relative to a, b and c) | *Marla RB1050 (HPEG-based)* | 0.1 | 0.085 | 0.085 | 0.075 |
| Mortar spread (mm) | | 209 | 210 | 211 | 208 |
| Compressive strength (MPa) | 1 day | 8.8 | 9.2 | 9.4 | 10.1 |
| | 2 days | 13.6 | 13.4 | 13.2 | 13.9 |
| | 28 days | 27.4 | 26.9 | 26.3 | 27.8 |

The progressive replacement of the coarse limestone filler allowed for the significant reduction of the rheology enhancing admixture (component e), from 0.1% to 0.075% while maintaining equivalent rheology, measured by means of the mortar spread.

It is noted that in this case, the progressive replacement of the coarse limestone filler with fine limestone filler did not affect the final mechanical performance of the mortars.

*Example 4: Impact of wetting agent on rheology and mechanical performance*

Three additional mortars were prepared using a fourth source of Natural Pozzolan and according to protocol described in Example 1. The compositions, rheological properties (yield stress and viscosity) and mechanical performance are set forth in table 4 below.

Table 4

| | | M21 | M22 |
|---|---|---|---|
| Component a (%dry weight) | Portland Cement | 25 | 25 |
| Component b (%dry weight) | Zeolitized tuff | 25 | 25 |
| Component c (%dry weight) | Fine limestone filler ($d_{50}$ < 4 $\mu$m) | 50 | 50 |
| Water to components a, b and c weight ratio | | 0.33 | 0.33 |
| Component d (%dry weight relative to a, b and c) | $Na_2SO_4$ | 1.0 | 1.0 |
| | TIPA | 0.5 | 0.5 |
| Component e (%dry weight relative to a, b and c) | *Marla RB1050 (HPEG-based)* | 0.3 | 0.3 |
| | *Methyl pentanediol* | - | 0.7 |
| Mortar rheology | Yield stress (Pa) | 102 | 55 |
| | Viscosity (Pa.s) | 30 | 22 |
| Compressive strength (MPa) | 1 day | 14.3 | 12.9 |
| | 28 days | 29.5 | 29.7 |

As can be seen from table 4, the addition of methyl pentanediol as a wetting agent allows to decrease both the yield stress and the viscosity while maintaining compressive strength at 1 day and 28 days. This is a supplemental technical effect giving benefice for the worker since the mortar containing the wetting agent is more easy to handle than the mortar not containing the wetting agent.

## Claims

**1.** Binder composition comprising:

a. between 10% and 49% in dry weight of a clinker source, a lime source or a mixture thereof;
b. between 10% and 49% in dry weight of at least one pozzolanic material;
c. between 21% and 80% in dry weight of at least one filler;

d. between 0.1% and 10% in dry weight, relative to the total weight of components a, b and c, of at least one activator;
e. between 0.05% and 1.5% in dry weight, relative to the total weight of components a, b and c, of at least one rheology enhancing admixture;

said filler being a particles mixture of:

- between 10% and 100% in weight, in respect with the total weight of the filler, of particles having a $d_{50}$ greater than or equal to 0.05 $\mu$m and strictly less than 8 $\mu$m, and
- between 0% and 90% in weight, in respect with the total weight of the filler, of particles having a $d_{50}$ greater than or equal to 8 $\mu$m and strictly less than 200 $\mu$m,
wherein the rheology enhancing admixture comprises

(E1) at least one water reducing polymer;
(E2) optionally a wetting agent and/or a surfactant;

said water reducing polymer (E1) being a polyethylene glycol bearing terminal phosphonate groups and/or a copolymer comprising the following monomeric units:

- units UA

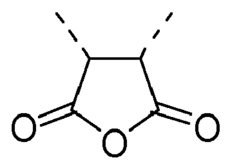

- units UB

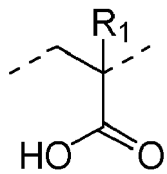

- units UC

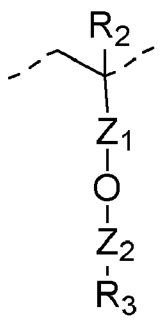

- units UD

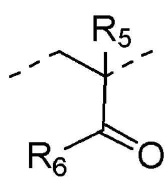

wherein: - - - represents a bonding site of a monomeric unit

the quantity of monomeric units UA is between 0 and 40 mol%,
the quantity of monomeric units UB is between 25 and 95 mol%,
the quantity of monomeric units UC is between 5 and 50 mol%,
the quantity of monomeric units UD is between 0 and 25 mol%,
$R_1$ and $R_2$ are independently hydrogen or methyl,
$Z_1$ is a bond, a methyl or an ethyl,
Z2 is a bond, $-CH_2CH_2O-$, $-CH_2CH_2OCH_2CH_2O-$ or $-CH_2CH_2CH_2CH_2O-$
$R_3$ is $-(CH_2CH_2O)_m-R_4$, $-(CH(CH_3)CH_2O)_n-R_4$ or $-(CH_2CH_2OCH(CH_3)CH_2O)y-R_4$,
m, n and y being an integer independently comprised between 7 and 100,
$R_4$ is hydrogen, methyl,
$R_5$ is hydrogen, methyl or $-CH_2COOH$, and
$R_6$ is -OH, $-OCH_2OH$, $-OCH_2CH_2OH$, $-OCH_2CH_2CH_2OH$, $-OCH_2CH(CH_3)CH_2OH$, - $OCH_2CH_2CH_2CH_2OH$, $-NHR_7$, a group bearing a phosphate function, a group bearing phosphonate function or a group bearing sulfonate function,
$R_7$ being a saturated or unsaturated, linear or branched chain comprising from 2 to 12 carbon atoms and eventually one or more heteroatoms, preferably O, N or S,
wherein the wetting agent and/or the surfactant decreases the surface tension of water below 68 $mN.m^{-1}$ and wherein the wetting agent is selected in the group comprising, preferably consisting of, glycol compounds and having a molecular weight comprised between 60 $g.mol^{-1}$ and 130 $g.mol^{-1}$, and wherein the surfactant have a molecular weight comprised between 131 $g.mol^{-1}$ and 300 $g.mol^{-1}$.

2. Binder composition according to claim 1, wherein the pozzolanic material is selected in the group comprising, preferably consisting of, silica fumes, natural pozzolan, volcanic ash, pumice, zeolitized tuff, argilised tuff, fly ashes, calcinated schists, metakaolin, calcined clays in particular illite, bentonite, montmorillonite, smectite , biomass ashes, rice husk ashes, diatomaceous earth, waste glass powder, ground opal, carbonated basic oxygen furnace slag, carbonated olivine, carbonated wollastonite and mixtures thereof.

3. Binder composition according to anyone of the preceding claims, wherein the filler is a limestone filler, more preferably a natural material sourcing from stone-pit, such as calcite and its polymorphs, like aragonite or vaterite, and dolomite or precipitated calcium carbonates and mixtures thereof.

4. Binder composition according to anyone of the preceding claims, wherein the activator is an alkaline metal salt an alkanolamine or mixture thereof, preferably said alkaline metal salt is selected in the group comprising, more preferably consisting of, sodium chloride, potassium chloride, lithium chloride, sodium sulfate, potassium sulfate, lithium sulfate, sodium carbonate, potassium carbonate, lithium carbonate, sodium nitrate, potassium nitrate, lithium nitrate, sodium nitrite, potassium nitrite, lithium nitrite, calcium nitrate, calcium nitrite, sodium thiocyanate, potassium thiocyanate, lithium thiocyanate and mixtures thereof, preferably said alkanolamine is selected in the group comprising, more preferably consisting of, triethanolamine (TEA), triisopropanolamine (TIPA), diethanolamine (DEA) or mixture thereof.

5. Dry concrete composition or dry industrial mortar composition, in particular tile adhesive, coating, assembling mortars, repair mortars, renders, technical mortars and mortars for floor covering comprising at least one aggregate and the binder composition according to any one of claims 1 to 4.

6. Wet concrete composition or wet industrial mortar composition in particular tile adhesive, coating, assembling mortars, repair mortars, renders, technical mortars and mortars for floor covering comprising at least one aggregate, the binder composition according to any one of claims 1 to 4 and water.

7. Hardened concrete composition or hardened industrial mortar composition obtained from the wet concrete composition or wet industrial mortar composition according to claim 6.

8. Process for preparing the wet concrete composition or the wet industrial mortar composition according to claim 6 comprising a step of mixing with water, at least one aggregate and the binder composition according to any one of claims 1 to 4, the binder composition being prepared before the mixing step or in situ during the mixing step from at least some of the different components of the binder composition taken separately and/or under the form of premix(es).

**9.** Process according to claim 8, wherein a ratio water to binder composition is comprised between 0.1 and 0.5, advantageously between 0.15 and 0.45, and more advantageously between 0.2 and 0.4.

**10.** Use of the binder composition according to any one of claims 1 to 4 for improving fresh state rheology, for instance fresh state yield stress and fresh state viscosity, of wet concrete composition or wet industrial mortar composition in particular tile adhesive, coating, assembling mortars, repair mortars, renders, technical mortars and mortars for floor covering.

**11.** Use of the binder composition according to any one of claims 1 to 4, wherein the fresh state yield stress is comprised between 0 Pa and 200 Pa, advantageously between 5 Pa and 100 Pa and more advantageously between 30 Pa and 60 Pa.

**12.** Use of the binder composition according to any one of claims 1 to 4, wherein the paste fresh state viscosity is comprised between 0 Pa.s and 50 Pa.s, advantageously between 15 Pa.s and 35 Pa.s and more advantageously between 20 Pa.s and 30 Pa.s.

**13.** Use of the binder composition according to any one of claims 1 to 4, for the preparation of precast concrete or ready-mix concrete.

Europäisches Patentamt
European Patent Office
Office européen des brevets

# EUROPEAN SEARCH REPORT

Application Number
EP 22 30 6154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 603 238 B2 (SCHWARTZENTRUBER ARNAUD [FR]; MARTIN MYLENE [FR] ET AL.) 10 December 2013 (2013-12-10) * columns 21-24 * | 1-13 | INV. C04B24/26 C04B28/02 C04B28/04 |
| X | US 2015/020714 A1 (MARTIN MYLENE [FR] ET AL) 22 January 2015 (2015-01-22) * paragraphs [0002] - [0075] * * paragraphs [0084] - [0095]; table 1 * | 1-13 | |

TECHNICAL FIELDS SEARCHED (IPC)

C04B

The present search report has been drawn up for all claims

1

| Place of search | Date of completion of the search | Examiner |
|---|---|---|
| Munich | 16 January 2023 | Gattinger, Irene |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 30 6154

This annex lists the patent family members relating to the patent documents cited in the above-mentioned European search report. The members are as contained in the European Patent Office EDP file on
The European Patent Office is in no way liable for these particulars which are merely given for the purpose of information.

16-01-2023

| Patent document cited in search report | Publication date | Patent family member(s) | Publication date |
|---|---|---|---|
| US 8603238 B2 | 10-12-2013 | BR PI1009091 A2 | 01-03-2016 |
| | | CA 2754294 A1 | 07-10-2010 |
| | | CN 102348661 A | 08-02-2012 |
| | | EP 2411344 A2 | 01-02-2012 |
| | | ES 2882823 T3 | 02-12-2021 |
| | | FR 2943662 A1 | 01-10-2010 |
| | | JP 5899336 B2 | 06-04-2016 |
| | | JP 2012521344 A | 13-09-2012 |
| | | JP 2015091757 A | 14-05-2015 |
| | | KR 20110130443 A | 05-12-2011 |
| | | MY 156433 A | 26-02-2016 |
| | | PL 2411344 T3 | 22-11-2021 |
| | | RU 2011142751 A | 27-04-2013 |
| | | US 2012024198 A1 | 02-02-2012 |
| | | WO 2010112687 A2 | 07-10-2010 |
| | | ZA 201106595 B | 30-05-2012 |
| US 2015020714 A1 | 22-01-2015 | CA 2865572 A1 | 12-09-2013 |
| | | CN 104203868 A | 10-12-2014 |
| | | EP 2822918 A1 | 14-01-2015 |
| | | FR 2987834 A1 | 13-09-2013 |
| | | KR 20140139546 A | 05-12-2014 |
| | | RU 2014140610 A | 27-04-2016 |
| | | US 2015020714 A1 | 22-01-2015 |
| | | WO 2013131814 A1 | 12-09-2013 |

EPO FORM P0459

For more details about this annex : see Official Journal of the European Patent Office, No. 12/82